# EUROPEAN PATENT SPECIFICATION

(11) **EP 1 437 947 B1**
(45) Date of publication and mention of the grant of the patent: **02.03.2005**
(21) Application number: 02788521.9
(22) Date of filing: 16.10.2002
(51) Int. Cl.: A23N 1/02

(54) **METHOD AND PLANT FOR EXTRACTING JUICE OR PUREE FROM A FOOD PRODUCT**
VERFAHREN UND VORRICHTUNG ZUR GEWINNUNG VON SAFT UND PULPE AUS NAHRUNGMITTELN
PROCEDE ET INSTALLATION D'EXTRACTION DE JUS OU DE PUREE D'UN PRODUIT ALIMENTAIRE

(30) Priority: 22.10.2001 IT PR20010068
(43) Date of publication of application: 21.07.2004
(73) Proprietor: SIG Manzini S.p.A., 43100 Parma (IT)
(72) Inventor: DALL'ARGINE, Franco, I-43100 Parma (IT); VIGNOLI, Luigi, I-43022 Tortiano di Montechiarugolo (IT); PACIELLO, Gerardo, 43100 Parma (IT); ARELLI, Pierluigi, I-43100 Parma (IT); LUSARDI, Roberto, I-43100 Parma (IT)
(74) Representative: Gotra, Stefano
(86) International application number: PCT/IT2002/000666
(87) International publication number: WO 2003/034843

(56) References cited:
- EP-A- 0 457 062
- US-A- 2 909 332
- US-A- 3 714 887
- US-A- 4 721 627
- US-A- 4 957 043
- PATENT ABSTRACTS OF JAPAN vol. 2000, no. 16, 8 May 2001 (2001-05-08) & JP 2001 000845 A (TOYOTA MOTOR CORP;THREE BOND CO LTD), 9 January 2001 (2001-01-09)

## Description

### TECHNICAL FIELD AND BACKGROUND ART.

The present invention relates to a method and a plant for extracting juice or puree from a food product.

Currently, the extraction of juice or puree from a food product comprises numerous phases and in particular:
- trituration of the product;
- possible pre-refinement with sieves with large holes, typically having diameter of 2-4 mm, to eliminate seeds, peels and petioles);
- enzymatic deactivation by heating the triturated product;
- final heat refinement, passing the triturated product through sieves with holes of smaller diameter, typically 0.5 min, to obtain the juice or puree;
- deaeration of the product;
- sterilisation of the product with additional heating thereof.

However, it is desirable to work the product without heating as much as possible, avoiding heat stresses, and it is also desirable to reduce the phases of the method as well as its duration.

EP-A-0457062 discloses a method of making a mash of fresh fruits or vegetables on a commercial scale comprising the phase of rupturing the product in an environment under vacuum and extracting the pulp without heating by means of a refiner.

The rupturing and chopping of the product does not consent an adequate deaeration of the product and furthermore, being the product treated by gravity, there is not the possibility of maintaining it under vacuum for a predetermined time.

### DISCLOSURE OF INVENTION.

The aim of the present invention therefore is to eliminate the aforesaid drawbacks making available a simplified method and plant that allow the ultra-rapid extraction of juice or puree without heating.

Said aims are fully achieved by the method and the plant of the present invention, characterised by the contents of the claims set out below. In particular, the method comprises the following phases:
- cutting the product into slices under vacuum, with the slices remaining in the environment under vacuum for a sufficient time to allow their adequate deaeration;
- cold extraction of the juice or puree by means of a known strainer/refiner;
- sterilisation of the juice or puree by integrated enzymatic deactivation.

Before the cold extraction of the juice or puree, a dynamic mixing of the slices can be provided, providing a homogeneous consistency to the pulp.

The plant comprises, inside the deaerator and in an environment under vacuum, a device for cutting the product into slices. Said slices are then fed to a known refiner/strainer wherefrom exits juice or puree, which then passes into a steriliser with integrated enzymatic deactivation.

The deaerator, wherein is inserted a device for cutting the product into slices, preferably comprises a baffle, for instance of the conical type, so shaped as to maintain for a certain time, preferably about 90 seconds, the slices in the deaerator under vacuum before they are fed by gravity to a feeding pump. Between the deaerator and the refiner/strainer can be present a dynamic mixer which receives the slices and is so shaped as to provide the pulp with homogeneity of consistency. The dynamic mixer preferably comprises a rotor with hexagonal cross section, rotating with adjustable speed inside a stator with substantially square cross section.

### BRIEF DESCRIPTION OF DRAWINGS.

This and other characteristics shall become more readily apparent from the following description of a preferred embodiment illustrated, purely by way of non limiting example, in the accompanying drawing tables, in which:

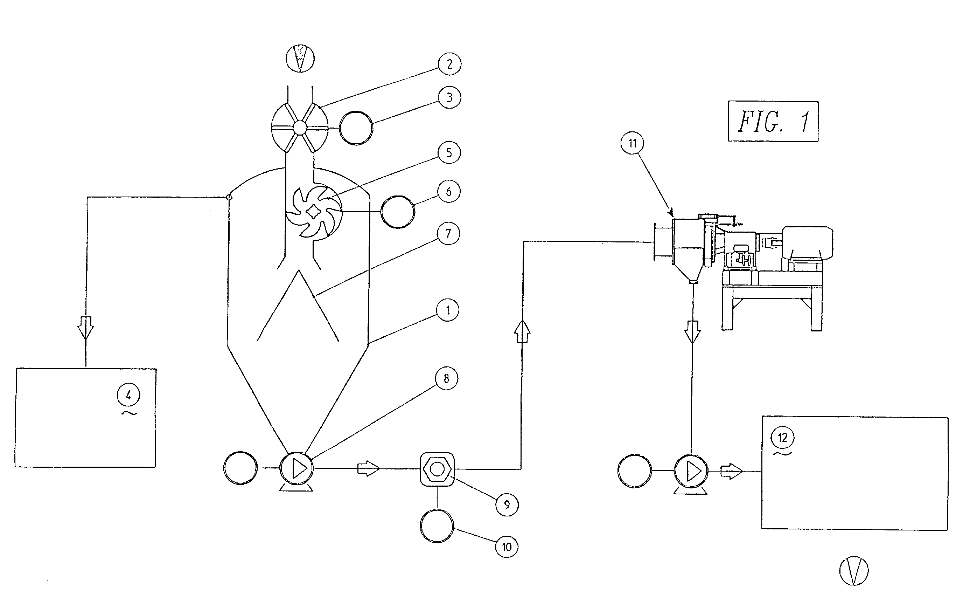

- Figure 1 shows a global diagram of the plant and of the method;
- Figure 2 shows a cross section of a component of the plant.

### BEST MODE FOR CARRYING OUT THE INVENTION.

With reference to the figures, the reference number 1 indicates a deaerator that receives the product from a substantially known discharge valve 2 (for instance star shaped) actuated by a motorisation 3.

The product, typically fruit or whole vegetables, enters the deaerator 1 which is under vacuum because it is connected to a known vacuum-forming assembly, which substantially provides for extracting the air from the deaerator.

The reference number 5 indicates a device for cutting the product into slices, also provided with a related motorisation 6, which originally slices the product (and does not triturate it as in the prior art) inside the deaerator, hence in an environment under vacuum.

The slices of product fall on a baffle 7, preferably having conical shape, whose function is to hold the slices in the environment under vacuum for a sufficient time (about 90 seconds) to allow its adequate deaeration, before the slices themselves fall laterally to the baffle towards a pump 8 that feeds the product to a dynamic mixer 9 provided with its own motorisation 10, in particular a gearmotor.

According to an alternative embodiment not illustrated herein, the baffle 7 can be replaced with a motorised auger for a precise control of the time of permanence of the slices in the deaerator.

The deaerated slices are free of air and hence suitable to retard the effect of enzymes.

The dynamic mixer 9 is not strictly necessary for the method and the plant of the present invention, but if present it provides homogeneity of consistency to the pulp and an equal distribution of the components of the treated product, to favour the subsequent refinement in a substantially known refiner/strainer 11 (with a sieve having holes of about 0.5 mm diameter) wherefrom exits juice or puree that is sent to a steriliser 12 with integrated enzymatic deactivation which provides for the sterilisation and final cooling of the product under aseptic conditions.

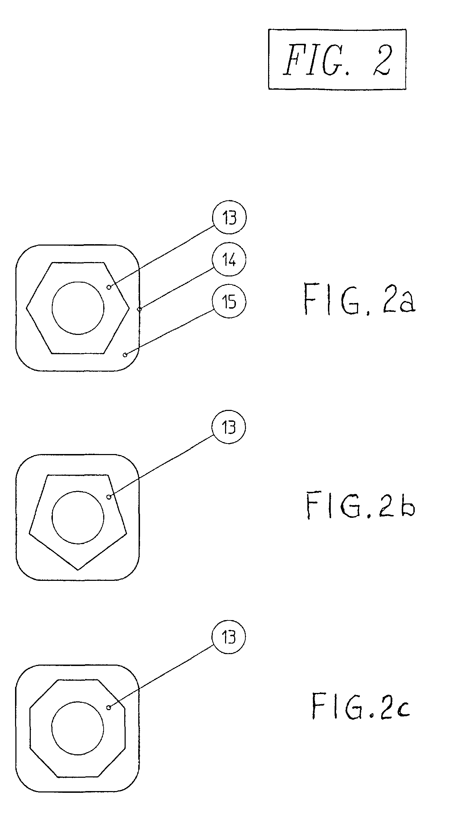

In the preferred embodiment of Figure 2, the dynamic mixer comprises a rotor 13 with hexagonal cross section (Figure 2a), but it can more generally have polygonal cross section and in particular pentagonal or octagonal cross section as shown in Figures 2b and 2c, with preferably constant development and speed adjustable by means of the gearmotor 10. Said rotor rotates inside a stator 14 having substantially square cross section with preferably constant development.

In the gap 15 between rotor and stator, an adequate turbulence is created.

The method of the present invention thus originally provides a phase of slicing the product under vacuum, a possible mixing (in the dynamic mixer 9), followed by cold refinement and sterilisation-cooling which precedes the aseptic packaging of the final product.

The deaeration of the product occurs without heating, avoiding the loss of aroma encountered in deaerating procedures with heat.

The present method also allows to reduce and/or eliminate use of ascorbic acid or other anti-oxidation systems, as well as a reduction in processing times and energy consumption, maintaining a high efficiency of the method, of about 95%.

## Claims

1. Method for extracting juice or puree from a food product, **characterised in that** it comprises the phases of:
- cutting the product into slices in an environment under vacuum and permanence of the slices in the environment under vacuum for a sufficient time to allow their adequate deaeration;
- extracting the juice or puree without heating by means of a known strainer/refiner;
- sterilising-cooling of the juice or puree under aseptic conditions by integrated enzymatic deactivation.

2. Method as claimed in claim 1, wherein before extracting the juice or puree without heating, the slices are subjected to dynamic mixing, providing homogeneity of consistency to the pulp.

3. Method as claimed in claim 1, wherein the permanence time of the slices in the environment under vacuum is about 90 seconds.

4. Plant for extracting juice or puree from a food product fed to a deaerator, **characterised in that** it provides, inside the deaerator (1) and in an environment under vacuum, a device (5) for cutting the product into slices, the plant also comprising a known refiner/strainer (11) wherefrom exits juice or puree, and a steriliser (12) which receives the juice or puree and sterilizes it with integrated enzymatic deactivation.

5. Plant as claimed in claim 4, wherein the deaerator (1), downstream of the device (5) for cutting the product into slices, comprises an additional device (7) so shaped as to maintain for a certain amount of time the slices in the deaerator (1) under vacuum before they are fed by gravity to a feeding pump (8).

6. Plant as claimed in claim 5, wherein the additional device (7) is a conical baffle.

7. Plant as claimed in claim 5, wherein the additional device (7) is a motorised auger for precise control over the time of permanence of the slices in the deaerator.

8. Plant as claimed in claim 4, wherein between the deaerator (1) and the refiner/strainer (11) is present a dynamic mixer (9) which receives the slices and is shaped in such a way as to provide homogeneity of consistency to the pulp.

9. Plant as claimed in claim 8, wherein the dynamic mixer (9) comprises a rotor (13) with polygonal section rotating with adjustable speed inside a stator (14) with substantially square section.

10. Plant as claimed in claim 9, wherein the rotor (13) has hexagonal cross section.

## Patentansprüche

1. Verfahren zur Gewinnung von Saft und Pulpe aus Nahrungsmitteln, **dadurch gekennzeichnet dass** es folgende Schritte umfasst:
- Schneiden des Produktes in Scheiben in einer Unterdruckatmosphäre und Verbleiben der Scheiben in der Unterdruckatmosphäre über einen für die angemessene Entlüftung der Scheiben ausreichenden Zeitraum;
- Kaltgewinnen des Saftes bzw. der Pulpe mithilfe einer bekannten Passier-/Püriermaschine;
- Sterilisieren/Abkühlen des Saftes bzw. der Pulpe unter keimfreien Bedingungen mithilfe integrierter enzymatischer Deaktivierung.

2. Verfahren nach Anspruch 1, bei dem die Scheiben vor der Kaltgewinnung von Saft bzw. Pulpe dynamisch gemischt werden, wodurch die Pulpe eine gleichförmige Konsistenz erhält.

3. Verfahren nach Anspruch 1, bei dem die Scheiben über einen Zeitraum von etwa 90 Sekunden in der Unterdruckatmosphäre verbleiben.

4. Anlage zur Gewinnung von Saft und Pulpe aus Nahrungsmitteln, die einem Entlüfter zugeführt werden, **dadurch gekennzeichnet, dass** die Anlage im Inneren des Entlüfters (1) und in einer Unterdruckatmosphäre eine Vorrichtung (5) zum Schneiden des Produktes in Scheiben aufweist, wobei die Anlage ferner eine bekannte Passier/Püriermaschine (11) umfasst, aus der Saft bzw. Pulpe austritt, sowie einen Sterilisator (12), der mit dem Saft bzw. der Pulpe gespeist wird und dieser bzw. diese durch integrierte enzymatische Deaktivierung sterilisiert.

5. Anlage nach Anspruch 4, bei dem der Entlüfter (1) stromabwärts der Vorrichtung (5) zum Schneiden des Produkts in Scheiben eine derart ausgebildete Zusatzvorrichtung (7) umfasst, dass die Scheiben eine bestimmte Zeit unter Vakum in dem Entlüfter (1) gehalten werden, bevor sie durch Schwerkraft einer Speisepumpe (8) zugeführt werden.

6. Anlage nach Anspruch 5, bei dem die Zusatzvorrichtung (7) ein konisches Leitblech ist.

7. Anlage nach Anspruch 5, bei der es sich bei der Zusatzvorrichtung (7) um eine Schnecke mit Motor handelt zur genauen Kontrolle der Zeit, während der die Scheiben in dem Entlüfter verbleiben.

8. Anlage nach Anspruch 4, bei dem zwischen dem Entlüfter (1) und der Passier-/Püriermaschine (11) ein dynamischer Mixer (9) angeordnet ist, der mit den Scheiben gespeist wird und so ausgebildet ist, dass er für eine gleichförmige Konsistenz der Pulpe sorgt.

9. Anlage nach Anspruch 8, bei der der dynamische Mixer (9) einen im Querschnitt vieleckig ausgebildeten Rotor (13) umfasst, der in dem einen im wesentlichen quadratischen Querschnitt aufweisenden Stator (14) mit verstellbarer Geschwindigkeit dreht.

10. Anlage nach Anspruch 9, bei dem der Rotor (13) im Querschnitt sechseckig ausgebildet ist.

## Revendications

1. Procédé d'extraction de jus ou de purée d'un produit alimentaire, **caractérisé en ce qu'**il comprend les phases de:
- coupe du produit en tranches dans un environnement sous vide et permanence des tranches dans l'environnement sous vide pour un temps suffisant à consentir leur correcte désaération;
- extraction du jus ou de la purée sans chauffage au moyen d'une passoire/raffineur bien connu;
- stérilisation-refroidissement du jus ou purée sous conditions aseptiques par désactivation enzymatique intégrée.

2. Procédé selon la revendication 1, dans lequel, avant extraction du jus ou de la purée sans chauffage, les tranches sont sujettes à un mélange dynamique, donnant homogénéité de consistance à la pulpe.

3. Procédé selon la revendication 1, dans lequel le temps de permanence des tranches dans l'environnement sous vide est d'environ 90 secondes.

4. Installation pour l'extraction du jus ou de la purée d'un produit alimentaire alimenté vers un désaérateur, **caractérisée en ce qu'**elle présente, à l'intérieur du désaérateur (1) et dans un environnement sous vide, un dispositif (5) pour couper le produit en tranches, l'installation comprenant également un raffineur/passoire (11) de type connu duquel sort le jus ou la purée, et un stérilisateur (12) qui reçoit le jus ou la purée et le stérilise avec une désactivation enzymatique intégrée.

5. Installation selon la revendication 4, dans laquelle le désaérateur (1), en aval du dispositif (5) pour couper le produit en tranches, comprend un dispositif additionnel (7) conformé de manière à maintenir pour un certain temps les tranches dans le désaérateur (1) sous vide avant qu'elles ne soient fournies par gravité à une pompe d'alimentation (8).

6. Installation selon la revendication 5, dans laquelle le dispositif additionnel (7) est un déflecteur de type conique.

7. Installation selon la revendication 5, dans laquelle le dispositif additionnel (7) est une vis d'alimentation motorisée pour le contrôle précis du temps de permanence des tranches dans le désaérateur.

8. Installation selon la revendication 4, dans laquelle entre le désaérateur (1) et le raffineur/passoire (11) est présent un mixeur dynamique (9) qui reçoit les tranches et est conformé de manière à donner une homogénéité de consistance à la pulpe.

9. Installation selon la revendication 8, dans laquelle le mixeur dynamique (9) comprend un rotor (13) avec une section polygonale pivotant avec une vitesse réglable à l'intérieur d'un stator (14) ayant une section substantiellement carrée.

10. Installation selon la revendication 9, dans laquelle le rotor (13) présente une section hexagonale.
